# EUROPEAN PATENT APPLICATION

(11) **EP 4 682 183 A1**
(43) Date of publication of application: **21.01.2026**
(21) Application number: 24774694.4
(22) Date of filing: 07.03.2024
(51) Int. Cl.: C08G 18/08, C08G 18/00, C08G 18/12, C08G 18/44, C08G 18/48, C08G 18/75, C09D 5/02, C09D 175/04

(54) **AQUEOUS DISPERSION OF POLYURETHANE RESIN AND COATING AGENT**

(30) Priority: 17.03.2023 JP 2023043168
(71) Applicant: DKS Co. Ltd., Kyoto-shi, Kyoto 600-8873 (JP)
(72) Inventor: NISHIMURA, Takuma, Kyoto-shi, Kyoto 600-8873 (JP); WATANABE, Toshiya, Kyoto-shi, Kyoto 600-8873 (JP); MANO, Hiroyuki, Kyoto-shi, Kyoto 600-8873 (JP); HIROSE, Masaharu, Kyoto-shi, Kyoto 600-8873 (JP)
(74) Representative: TBK
(86) International application number: PCT/JP2024/008637
(87) International publication number: WO 2024/195555

(57) **Abstract**

Provided is an aqueous dispersion of a polyurethane resin, the aqueous dispersion being able to achieve improvement in self-healing properties and solvent resistance and suppression of tack.

An aqueous dispersion of a polyurethane resin according to an embodiment is an aqueous dispersion of a polyurethane resin having a portion derived from an isocyanate group-containing urethane prepolymer (A) and a portion derived from a chain extender (B). The isocyanate group-containing urethane prepolymer (A) includes, as constituent components, (A1) a polycarbonate diol that includes a constituent component derived from a diol having 5 carbon atoms and a constituent component derived from a diol having 6 carbon atoms and that has a number-average molecular weight of 300 to 2500, (A2) a polyethylene glycol having a number-average molecular weight of 500 to 2500, (A3) a carboxy group-containing polyol, and (A4) an alicyclic polyisocyanate. The amount of the polyethylene glycol relative to 100 parts by mass of the polycarbonate diol is 5 to 30 parts by mass.

## Description

### Technical Field

Embodiments of the present invention relate to an aqueous dispersion of a polyurethane resin and a coating agent containing the aqueous dispersion of a polyurethane resin.

### Background Art

Aqueous dispersions of polyurethane resins are widely used as, for example, raw materials of various coating agents for, for example, the interior and exterior of aircraft, automobiles, and the like and outer wall surfaces and flooring of houses.

For example, PTL 1 discloses an aqueous dispersion of a polyurethane resin obtained by reacting a urethane prepolymer with a chain extender, wherein the urethane prepolymer has a weight-average molecular weight of 2000 to 30000, the polyurethane resin has a degree of crosslinking of 0.03 to 0.15 mol/kg, and the polyurethane resin has a urea content of 0.5 mol/kg or less. Specifically, PTL 1 discloses an aqueous dispersion of a polyurethane resin obtained by using a polycarbonate diol, a carboxy group-containing polyol, and an alicyclic polyisocyanate as constituent components of a urethane prepolymer and reacting the urethane prepolymer with an amine chain extender.

### Citation List

### Patent Literature

PTL 1: International Publication No. 2020/195964

### Summary of Invention

### Technical Problem

According to PTL 1, an aqueous dispersion of a polyurethane resin, from which aqueous dispersion a coating film having good self-healing properties, suppressed tack, and good solvent resistance can be formed, is provided. However, the market demands for these properties are increasing, and further improvements are required.

An object of an embodiment of the present invention is to provide an aqueous dispersion of a polyurethane resin, the aqueous dispersion being able to achieve improvement in self-healing properties and solvent resistance and suppression of tack.

### Solution to Problem

The present invention includes the following embodiments.
[1] An aqueous dispersion of a polyurethane resin having a portion derived from an isocyanate group-containing urethane prepolymer (A) and a portion derived from a chain extender (B), wherein the isocyanate group-containing urethane prepolymer (A) includes, as constituent components, (A1) a polycarbonate diol that includes a constituent component derived from a diol having 5 carbon atoms and a constituent component derived from a diol having 6 carbon atoms and that has a number-average molecular weight of 300 to 2500, (A2) a polyethylene glycol having a number-average molecular weight of 500 to 2500, (A3) a carboxy group-containing polyol, and (A4) an alicyclic polyisocyanate, and an amount of the polyethylene glycol relative to 100 parts by mass of the polycarbonate diol is 5 to 30 parts by mass.
[2] The aqueous dispersion of a polyurethane resin according to [1], wherein the isocyanate group-containing urethane prepolymer (A) is a urethane prepolymer that is obtained by reaction at an equivalent ratio NCO/OH of isocyanate groups to hydroxy groups of 1.02 to 1.50 and that has a terminal isocyanate group.
[3] The aqueous dispersion of a polyurethane resin according to [1] or [2], wherein an acid value is 15 to 40 mgKOH/g.
[4] The aqueous dispersion of a polyurethane resin according to any one of [1] to [3], wherein the chain extender (B) includes a triamine.
[5] The aqueous dispersion of a polyurethane resin according to any one of [1] to [4], wherein the alicyclic polyisocyanate includes hydrogenated diphenylmethane diisocyanate.
[6] A coating agent including the aqueous dispersion of a polyurethane resin according to any one of [1] to [5]. Advantageous Effects of Invention

According to an embodiment of the present invention, an aqueous dispersion of a polyurethane resin, the aqueous dispersion being excellent in self-healing properties and solvent resistance, being able to suppress tack, and further being excellent also in antifouling properties, can be provided.

### Description of Embodiments

An aqueous dispersion of a polyurethane resin (hereinafter also referred to simply as an aqueous dispersion) according to an embodiment is a dispersion of a polyurethane resin in water, the polyurethane resin being obtained by reacting an isocyanate group-containing urethane prepolymer (A) with a chain extender (B). Therefore, the polyurethane resin has a portion derived from the isocyanate group-containing urethane prepolymer (A) and a portion derived from the chain extender (B).

### [Isocyanate group-containing urethane prepolymer (A)]

The isocyanate group-containing urethane prepolymer (A) is obtained by reacting a polyol component with a polyisocyanate component, and in the present embodiment, the isocyanate group-containing urethane prepolymer (A) includes, as constituent components thereof, (Al) polycarbonate diol, (A2) polyethylene glycol, (A3) carboxy group-containing polyol, and (A4) alicyclic polyisocyanate. Therefore, the polyol component includes (Al) polycarbonate diol, (A2) polyethylene glycol, and (A3) carboxy group-containing polyol, and the polyisocyanate component includes (A4) alicyclic polyisocyanate.

### [(A1) Polycarbonate diol]

Polycarbonate diol is a polyol that has, in its molecule, a repeating unit including a carbonate group (-O-(C=O)-O-) and has hydroxy groups at both ends. In the present embodiment, a polycarbonate diol including a constituent component derived from a diol having 5 carbon atoms and a constituent component derived from a diol having 6 carbon atoms is used.

As the polycarbonate diol, for example, a copolymer obtained by reacting a carbonic acid ester and/or phosgene with a diol, the diol being a combination of a diol having 5 carbon atoms and a diol having 6 carbon atoms, is used.

The diol having 5 carbon atoms is preferably an alkanediol having 5 carbon atoms, and may be linear or branched. Specific examples include 1,5-pentanediol, 1,4-pentanediol, 2,4-pentanediol, 1,2-pentanediol, and 2-methyl-1,4-butanediol, and these may be used alone or in combination of two or more. Preferred is 1,5-pentanediol.

The diol having 6 carbon atoms is preferably an alkanediol having 6 carbon atoms, and may be linear or branched. Specific examples include 1,6-hexanediol, 1,5-hexanediol, 2,5-hexanediol, 2,4-hexanediol, 1,2-hexanediol, and 3-methyl-1,5-pentanediol, and these may be used alone or in combination of two or more. Preferred is 1,6-hexanediol.

Examples of the carbonic acid ester include dimethyl carbonate, diethyl carbonate, methyl ethyl carbonate, ethylene carbonate, propylene carbonate, butylene carbonate, diphenyl carbonate, dinaphthyl carbonate, and phenyl naphthyl carbonate, and these may be used alone or in combination of two or more.

The polycarbonate diol according to the embodiment may include, in its skeleton, a constituent component other than the constituent component derived from a diol having 5 carbon atoms and the constituent component derived from a diol having 6 carbon atoms, as long as it is generally recognized as a polycarbonate diol by those skilled in the art.

In an embodiment, a polycarbonate diol represented by general formula (1) below may be used.

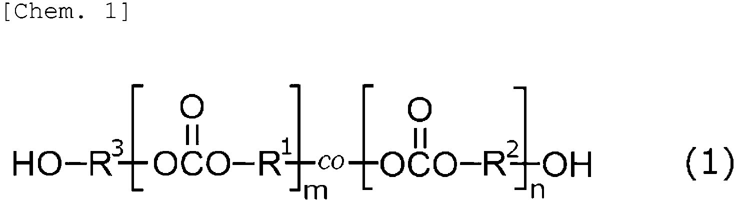

In the formula, R¹ represents a divalent hydrocarbon group (preferably an alkanediyl group, more preferably a pentamethylene group) having 5 carbon atoms, and is a structural component derived from a diol having 5 carbon atoms. R² represents a divalent hydrocarbon group (preferably an alkanediyl group, more preferably a hexamethylene group) having 6 carbon atoms, and is a structural component derived from a diol having 6 carbon atoms. R³ represents R¹ or R². m and n each represent an integer of 1 or greater. The sequence pattern of the monomers in the copolymer is not particularly limited.

As the polycarbonate diol, a diol obtained by reacting 1,6-hexanediol and 1,5-pentanediol with a carbonic acid ester and/or phosgene, that is, poly(hexamethylene carbonate/pentamethylene carbonate) diol, is preferably used.

The molar ratio of the constituent component derived from a diol having 5 carbon atoms to the constituent component derived from a diol having 6 carbon atoms (m/n in the above formula (1)) is not particularly limited, and may be 75/25 to 25/75, or 65/35 to 35/65.

From the viewpoint of self-healing properties, tack suppression, and solvent resistance, the number-average molecular weight (Mn) of the polycarbonate diol is 300 to 2500, preferably 400 to 2200, more preferably 500 to 2000, still more preferably 700 to 1500.

In this Description, the number-average molecular weight (Mn) is a value determined by measurement by GPC (gel permeation chromatography) and calculation using a calibration curve created using standard polystyrene. Specifically, the measurement can be performed under the following GPC conditions: column: "TSKgelG4000HXL + TSKgel G3000HXL + TSKgel G2000HXL + TSKgel G1000HXL + TSKgel G1000HXL" manufactured by Tosoh Corporation, mobile phase: THF (tetrahydrofuran), mobile phase flow rate: 1.0 mL/min, column temperature: 40°C, sample injection volume: 50 µL, sample concentration: 0.2 mass%.

### [(A2) Polyethylene glycol]

In the present embodiment, a polyethylene glycol as well as the polycarbonate diol is used as the polyol component. The use of the polyethylene glycol can improve antifouling properties and solvent resistance.

From the viewpoint of self-healing properties, tack suppression, solvent resistance, and antifouling properties, a polyethylene glycol having a number-average molecular weight of 500 to 2500 is used. The number-average molecular weight of the polyethylene glycol is preferably 600 to 2300, more preferably 700 to 2000, still more preferably 800 to 1800.

### [(A3) Carboxy group-containing polyol]

In the present embodiment, a carboxy group-containing polyol is further used as the polyol component. The use of the carboxy group-containing polyol enables the polyurethane resin to have an acid value.

The carboxy group-containing polyol is a polyol having a carboxy group in its molecule, and examples include carboxylic acid-containing compounds such as dimethylolpropionic acid, 2,2-dimethylolbutyric acid, 2,2-dimethylolvaleric acid, dihydroxymaleic acid, and 2,6-dihydroxybenzoic acid, derivatives thereof, and salts thereof. These may be used alone or in combination of two or more.

Here, a carboxy group is a concept including not only the acid form (-COOH) but also the salt form, that is, a carboxylate group (-COOX, where X is a cation forming the salt together with the carboxylic acid), and the acid form and the salt form may coexist. The carboxy group, when neutralized to form a salt, can render the finally obtained polyurethane resin water-dispersible. Thus, in the aqueous dispersion of the polyurethane resin, the carboxy group is present in the salt form. The type of the salt form varies depending on the type of the neutralizer described later, and may be an alkali metal salt such as sodium salt, a tertiary amine salt such as triethylamine salt, or ammonium salt.

### [(A4) Alicyclic polyisocyanate]

In the present embodiment, an alicyclic polyisocyanate is used as the polyisocyanate component. The use of the alicyclic polyisocyanate can provide the polyurethane resin with moderate rigidity and can improve self-healing properties while suppressing tack. In addition, yellowing of the polyurethane resin, which occurs when an aromatic polyisocyanate is used, can be suppressed.

Examples of the alicyclic polyisocyanate include hydrogenated diphenylmethane diisocyanate (hydrogenated MDI), hydrogenated xylylene diisocyanate, isophorone diisocyanate, 1,4-cyclohexane diisocyanate, methylcyclohexylene diisocyanate, **1,3-**bis(isocyanatomethyl)cyclohexane, and modified products and polynuclear forms thereof. Examples of the modified products include isocyanurate-modified products, allophanate-modified products, biuret-modified products, adduct-modified products, and carbodiimide-modified products. These alicyclic polyisocyanates may be used alone or in combination of two or more.

In particular, the alicyclic polyisocyanate is preferably hydrogenated MDI. Hydrogenated MDI is diphenylmethane diisocyanate (MDI) with hydrogen added, and one example is dicyclohexylmethane 4,4'-diisocyanate.

### [Polyol component]

In the polyol component constituting the isocyanate group-containing urethane prepolymer (A), the amount of (A2) polyethylene glycol relative to 100 parts by mass of (A1) polycarbonate diol is 5 to 30 parts by mass. When the amount of (A2) polyethylene glycol is 5 parts by mass or more, antifouling properties and solvent resistance can be improved. When the amount of (A2) polyethylene glycol is 30 parts by mass or less, tack can be suppressed, and solvent resistance and self-healing properties can be improved. The amount of (A2) polyethylene glycol relative to 100 parts by mass of (A1) polycarbonate diol is preferably 6 to 28 parts by mass, more preferably 8 to 25 parts by mass, still more preferably 10 to 20 parts by mass.

The amount of (A1) polycarbonate diol relative to 100 mass% of the polyol component is not particularly limited, but is preferably 65 to 95 mass%, more preferably 70 to 93 mass%, still more preferably 75 to 90 mass%.

The amount of (A2) polyethylene glycol relative to 100 mass% of the polyol component is not particularly limited, but is preferably 4.7 to 25 mass%, more preferably 5 to 20 mass%, still more preferably 6 to 15 mass%.

The amount of (A3) carboxy group-containing polyol relative to 100 mass% of the polyol component is not particularly limited, and may be, for example, 0.3 to 20 mass%, 2 to 15 mass%, or 4 to 10 mass%.

Here, 100 mass% of the polyol component on which the amounts of the components constituting the polyol component are based is calculated assuming that the carboxy group of (A3) carboxy group-containing polyol is in the acid form. The amount of (A3) carboxy group-containing polyol is also an amount in the acid form.

The polyol component constituting the isocyanate group-containing urethane prepolymer (A) is basically composed only of (A1) polycarbonate diol, (A2) polyethylene glycol, and (A3) carboxy group-containing polyol described above, but may include other polyols as long as the advantageous effects of the present embodiment are exhibited. The total amount of (A1) polycarbonate diol, (A2) polyethylene glycol, and (A3) carboxy group-containing polyol relative to 100 mass% of the polyol component is preferably 85 mass% or more, more preferably 90 mass% or more, still more preferably 95 mass% or more.

Examples of the other polyols include polyester polyols and polyether polyols other than polyethylene glycol. Further examples of the other polyols include low-molecular-weight polyols such as ethylene glycol, diethylene glycol, triethylene glycol, tetraethylene glycol, 1,2-propanediol, 1,3-propanediol, dipropylene glycol, tripropylene glycol, 1,2-butanediol, 1,3-butanediol, 1,4-butanediol, 2,3-butanediol, 1,5-pentanediol, 1,5-hexanediol, 1,6-hexanediol, 2,5-hexanediol, 1,7-heptanediol, 1,8-octanediol, 1,9-nonanediol, 1,10-decanediol, 1,11-undecanediol, 1,12-dodecanediol, neopentyl glycol, glycerol, trimethylolpropane, ditrimethylolpropane, tritrimethylolpropane, pentaerythritol, 1,4-cyclohexanedimethanol, hydrogenated bisphenol A, and bisphenol A.

### [Polyisocyanate component]

The polyisocyanate component constituting the isocyanate group-containing urethane prepolymer (A) is basically composed only of (A4) alicyclic polyisocyanate described above, but may include other polyisocyanates as long as the advantageous effects of the present embodiment are exhibited. The amount of (A4) alicyclic polyisocyanate relative to 100 mass% of the polyisocyanate component is preferably 85 mass% or more, more preferably 90 mass% or more, still more preferably 95 mass% or more.

Examples of the other polyisocyanates include aliphatic polyisocyanates such as tetramethylene diisocyanate, dodecamethylene diisocyanate, hexamethylene diisocyanate, and lysine diisocyanate, and aromatic polyisocyanates such as tolylene diisocyanate, diphenylmethane diisocyanate (MDI), 1,5-naphthylene diisocyanate, and xylylene diisocyanate.

### [NCO/OH]

The isocyanate group-containing urethane prepolymer (A) is preferably a urethane prepolymer obtained by reaction at an equivalent ratio NCO/OH (index) of isocyanate groups to hydroxy groups of 1.02 to 1.50 and having a terminal isocyanate group. NCO/OH is more preferably 1.05 to 1.35, still more preferably 1.08 to 1.25, further more preferably 1.10 to 1.20.

Here, NCO/OH is the molar ratio of isocyanate groups contained in the polyisocyanate component to hydroxy groups contained in the polyol component. NCO/OH is calculated using a hydroxyl value of the polyol component and an isocyanate value of the polyisocyanate component. The isocyanate value is calculated by Isocyanate value = { (isocyanate content) × 56110}/(42.02 × 100), using an isocyanate content measured in accordance with Method A of JIS K1603-1:2007.

### [Chain extender (B)]

Examples of the chain extender (B) include diamines, triamines, and tetramines. Examples of diamines include ethylenediamine, trimethylenediamine, piperazine, and isophoronediamine. Examples of triamines include diethylenetriamine and dipropylenetriamine. Examples of tetramines include triethylenetetramine. These chain extenders may be used alone or in combination of two or more.

From the viewpoint of more effectively improving self-healing properties, the chain extender (B) is preferably a trifunctional triamine, more preferably diethylenetriamine.

The amount of the chain extender (B) is not particularly limited, and may be, for example, 0.1 to 3.0 parts by mass, 0.2 to 2.5 parts by mass, 0.3 to 2.0 parts by mass, 0.4 to 1.5 parts by mass, or 0.5 to 1.2 parts by mass, relative to 100 parts by mass of the isocyanate group-containing urethane prepolymer (A).

### [Aqueous dispersion of polyurethane resin]

The aqueous dispersion of a polyurethane resin is obtained by reacting the isocyanate group-containing urethane prepolymer (A), which is obtained by reacting the polyol component including (Al) polycarbonate diol, (A2) polyethylene glycol, and (A3) carboxy group-containing polyol with the polyisocyanate component including (A4) alicyclic polyisocyanate, with the chain extender (B).

The polyurethane resin preferably has an acid value of 15 to 40 mgKOH/g. An acid value of 15 mgKOH/g or more tends to improve the tack-suppressing effect and solvent resistance. An acid value of 40 mgKOH/g or less tends to improve antifouling properties and self-healing properties. The acid value of the polyurethane resin is more preferably 17 to 30 mgKOH/g, still more preferably 18 to 25 mgKOH/g. The acid value of the polyurethane resin can be adjusted, for example, by the choice of the type and amount of (A3) carboxy group-containing polyol.

In this Description, the acid value can be determined, in accordance with JIS K0070-1992, from the amount of KOH (mg) required to neutralize free carboxy groups contained in 1 g of the solid content (i.e., the polyurethane resin) of the aqueous dispersion of the polyurethane resin.

The number-average molecular weight (Mn) of the polyurethane resin is not particularly limited, and may be, for example, 10,000 or more, or 50,000 or more. The average particle size of the aqueous dispersion of the polyurethane resin is not particularly limited, and may be, for example, 0.0005 to 0.5 µm. Here, the average particle size is a 50% cumulative particle size (d50) measured using "Microtrac UPA-UZ152" manufactured by NIKKISO CO., LTD.

The method of producing the aqueous dispersion of the polyurethane resin is not particularly limited. One example is a method in which the polyol component and the polyisocyanate component are reacted with each other to obtain an isocyanate group-containing urethane prepolymer (A), the urethane prepolymer (A) is neutralized with a neutralizer and emulsified and dispersed in water, and then the urethane prepolymer (A) and a chain extender (B) are reacted with each other.

Specifically, the polyol component and the polyisocyanate component are allowed to react without a solvent or in an organic solvent having no active hydrogen groups to synthesize the isocyanate group-containing urethane prepolymer (A). In the reaction, NCO/OH is set as described above. After the synthesis of the isocyanate group-containing urethane prepolymer (A), carboxy groups are neutralized with a neutralizer, and then the isocyanate group-containing urethane prepolymer (A) is emulsified and dispersed in water. Thereafter, the chain extender (B) is added in an equivalent amount smaller than that of the remaining isocyanate groups **(e.g.,** at an equivalent ratio of isocyanate groups to active hydrogen groups of the chain extender (B) of 1:0.50 to 0.95) to cause an interfacial polymerization reaction between isocyanate groups in emulsion micelles and the chain extender (B), thereby forming urea bonds. Thereafter, the solvent used is removed as required, whereby the aqueous dispersion of the polyurethane resin can be obtained.

Examples of the neutralizer include nonvolatile bases such as sodium hydroxide and potassium hydroxide, tertiary amines such as trimethylamine, triethylamine, dimethylethanolamine, methyldiethanolamine, and triethanolamine, and volatile bases such as ammonia. The neutralization can be performed before the urethane-forming reaction, during the reaction, or after the reaction.

The organic solvent optionally used in the synthesis of the isocyanate group-containing urethane prepolymer (A) may be an organic solvent that is inactive to isocyanate groups and that can dissolve the urethane prepolymer (A) to be formed. Examples of such an organic solvent include dioxane, methyl ethyl ketone, acetone, dimethylformamide, tetrahydrofuran, N-methyl-2-pyrrolidone, toluene, and propylene glycol monomethyl ether acetate.

The aqueous dispersion of the polyurethane resin includes water and the polyurethane resin dispersed in water, and may include other components as long as the advantageous effects of the present embodiment are exhibited. For example, the aqueous dispersion may include, as a dispersion medium, any of the above organic solvents together with water. In the aqueous dispersion, the concentration of the polyurethane resin is not particularly limited, and may be, for example, 10 to 50 mass% or 20 to 45 mass%.

### [Coating agent]

A coating agent according to an embodiment includes the aqueous dispersion of a polyurethane resin, and hence includes water and the polyurethane resin dispersed in water.

The coating agent may include other aqueous resins together with the polyurethane resin. Examples of the other aqueous resins include water-soluble or water-dispersible acrylic resins, water-soluble or water-dispersible polyester resins, water-soluble or water-dispersible alkyd resins, and water-soluble or water-dispersible cellulose resins.

In the coating agent, various commonly used additives can be used as long as the advantageous effects of the present embodiment are exhibited. Examples of such additives include weathering agents, antibacterial agents, antifungal agents, fillers, rust inhibitors, pigments, dyes, film formation aids, inorganic cross-linking agents, organic cross-linking agents **(e.g.,** blocked isocyanate-based cross-linking agents, epoxy-based cross-linking agents, carbodiimide-based cross-linking agents, oxazoline-based cross-linking agents, and melamine-based cross-linking agents), silane coupling agents, anti-blocking agents, viscosity modifiers, leveling agents, antifoaming agents, dispersion stabilizers, light stabilizers, antioxidants, UV absorbers, inorganic fillers, organic fillers, plasticizers, lubricants, and antistatic agents.

### EXAMPLES

Hereinafter, description will be made in more detail with reference to Examples and Comparative Examples, but these Examples are not intended to limit the present invention.

Details of components used in Examples are as follows.

### [(A1) Polycarbonate diol]

· Polycarbonate diol 1: "DURANOL T5651" manufactured by Asahi Kasei Corporation (number-average molecular weight: 1000, diol component: 1,5-pentanediol and 1,6-hexanediol, repeating unit: pentamethylene carbonate/hexamethylene carbonate = 1/1 (molar ratio))
· Polycarbonate diol 2: "ETERNACOLLPH-50" manufactured by UBE Corporation (number-average molecular weight: 500, diol component: 1,5-pentanediol and 1,6-hexanediol)
· Polycarbonate diol 3: "DURANOL T5652" manufactured by Asahi Kasei Corporation (number-average molecular weight: 2000, diol component: 1,5-pentanediol and 1,6-hexanediol, repeating unit: pentamethylene carbonate/hexamethylene carbonate = 1/1 (molar ratio))
· Polycarbonate diol C1: "ETERNACOLL UP-200" manufactured by UBE Corporation (number-average molecular weight: 2000, diol component: 1,5-pentanediol alone)
· Polycarbonate diol C2: "ETERNACOLL UH-200" manufactured by UBE Corporation (number-average molecular weight: 2000, diol component: 1,6-hexanediol alone)
· Polycarbonate diol C3: "ETERNACOLL PH-300" manufactured by UBE Corporation (number-average molecular weight: 3000, diol component: 1,5-pentanediol and 1,6-hexanediol)

### [(A2) Polyethylene glycol]

· Polyethylene glycol 1: "PEG-1000" manufactured by Sanyo Chemical Industries, Ltd. (number-average molecular weight: 1000)
· Polyethylene glycol 2: "PEG-2000" manufactured by Sanyo Chemical Industries, Ltd. (number-average molecular weight: 2000)
· Polyethylene glycol C1: "PEG-3000" manufactured by Sanyo Chemical Industries, Ltd. (number-average molecular weight: 3000)
· Polyethylene glycol C2: "PEG-300" manufactured by Sanyo Chemical Industries, Ltd. (number-average molecular weight: 300)

### [(A3) Carboxy group-containing polyol]

· Dimethylolpropionic acid: "Bis-MPA" manufactured by Perstorp AB

### [Polyisocyanate component]

· Hydrogenated MDI: Dicyclohexylmethane 4,4'-diisocyanate
· MDI: 4,4'-Diphenylmethane diisocyanate
· HDI: Hexamethylene diisocyanate

### <Synthesis of aqueous dispersion of polyurethane resin>

### [Example 1]

To a four-necked flask equipped with a stirrer, a reflux condenser, a thermometer, and a nitrogen inlet tube, 57.0 parts by mass of polycarbonate diol 1, 8.0 parts by mass of polyethylene glycol 1, 5.0 parts by mass of dimethylolpropionic acid (DMPA), and 100 parts by mass of methyl ethyl ketone were added, and thoroughly stirred and dissolved. Subsequently, 30.0 parts by mass of hydrogenated MDI was added and allowed to react at 75°C until the free isocyanate group content relative to the solid content reached 1.0 mass%, thereby obtaining a solution of an isocyanate group-containing urethane prepolymer in methyl ethyl ketone. This prepolymer solution was cooled to 45°C and neutralized by adding 3.8 parts by mass of triethylamine as a neutralizer, after which, under stirring using a homomixer, 300 parts by mass of distilled water was added to cause emulsification and dispersion. Subsequently, 0.7 parts by mass of diethylenetriamine was added, and a chain extension reaction was performed at 30°C for 30 minutes. While this was heated under reduced pressure, methyl ethyl ketone was distilled off to obtain an aqueous dispersion of a polyurethane resin having a solid content of 25 mass%. The obtained polyurethane resin had an acid value of 21.0 mgKOH/g.

### [Examples 2 to 13 and Comparative Examples 1 to 10]

The synthesis was performed in the same manner as in Example 1 except that the type and amount of the raw materials were changed as shown in Tables 1 and 2 below, thereby obtaining aqueous dispersions of polyurethane resins. In the tables, "Mixing ratio (A2)/(A1)" indicates the parts by mass of (A2) polyethylene glycol relative to 100 parts by mass of (Al) polycarbonate diol.

### <Evaluation of aqueous dispersion of polyurethane resin>

### [Preparation of coating layer]

Each aqueous dispersion of a polyurethane resin was applied onto a polyethylene terephthalate substrate (PET manufactured by Toray Industries, Inc., model No: #100 T60) so as to have a film thickness of about 20 µm and dried at 80°C for 10 minutes, thereby preparing a coating layer.

### [Antifouling properties] Fingerprint resistance

An index finger was pressed against a surface of the coating layer and held there for 3 seconds, and then the finger was gently lifted to leave a fingerprint. The left fingerprint was wiped off by reciprocating a nonwoven fabric ("BEMCOT M-311" manufactured by Asahi Kasei Corporation) in one direction. The condition after wiping was visually observed from above the coating film at an angle of 45° under a three-band fluorescent lamp, and the number of reciprocations required until the fingerprint was no longer visible was evaluated using the following three-grade scale.
∘: The fingerprint was wiped off in less than five reciprocations.
Δ: The fingerprint was wiped off in five or more and less than eight reciprocations.
×: More than eight reciprocations were required to wipe off the fingerprint.

### [Tack suppression]

Coating surfaces were bonded together under a load of 1 kg, and the condition of the coating surfaces at the time of peeling was visually observed to evaluate the tack-suppressing effect. Cases where the coating surfaces did not adhere to each other were evaluated as **"o"** (good); cases where less than 50% of the bonded area adhered were evaluated as "Δ" (fair); and cases where 50% or more of the bonded area adhered were evaluated as "×" (poor).

### [Solvent resistance]

The coating layer was subjected to a rubbing test 10 times under a load of 1 kg using a felt impregnated with toluene, and the condition of the coating surface was visually observed. Cases where the coating surface showed no change were evaluated as "o"; cases where erosion was observed were evaluated as "Δ"; and cases where the coating layer was peeled off were evaluated as "×".

### [Self-healing properties]

The coating surface was rubbed back and forth 15 times with a brass wire brush (No.9 manufactured by Fujiwara 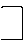 Sangyo **Co.,** Ltd.) under a load of 500 **g,** and the extent of scratching on the coating surface was visually observed. The evaluation was performed at room temperature 23°C. Cases where scratches disappeared in less than 1 minute were evaluated as "o"; cases where it took 1 minute to 30 minutes for scratches to disappear were evaluated as "Δ"; and cases where scratches did not disappear even after 30 minutes were evaluated as "×".

**[Table 1]**

| | | Example | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Composition (parts by mass) | | | | | | | | | | | | | | |
| | Polycarbonate diol 1 | 57.0 | | | 57.0 | 57.0 | 57.0 | 61.3 | 54.0 | 50.8 | 53.5 | 58.2 | 48.7 | 60.0 |
| | Polycarbonate diol 2 | | 48.3 | | | | | | | | | | | |
| | Polycarbonate diol 3 | | | 63.0 | | | | | | | | | | |
| | Polycarbonate diol C1 | | | | | | | | | | | | | |
| Polyol | Polycarbonate diol C2 | | | | | | | | | | | | | |
| | Polycarbonate diol C3 | | | | | | | | | | | | | |
| | Polyethylene glycol 1 | 8.0 | 6.7 | 9.0 | | 8.0 | 8.0 | 3.7 | 11.0 | 14.2 | 7.5 | 8.3 | 6.8 | 8.3 |
| | Polyethylene glycol 2 | | | | 8.0 | | | | | | | | | |
| | Polyethylene glycol C1 | | | | | | | | | | | | | |
| | Polyethylene glycol C2 | | | | | | | | | | | | | |
| | Dimethylolpropionic acid | 5.0 | 5.0 | 5.0 | 5.0 | 5.0 | 5.0 | 5.0 | 5.0 | 5.0 | 5.0 | 5.0 | 9.0 | 3.7 |
| | Hydrogenated MDI | 30.0 | 40.0 | 23.0 | 30.0 | 30.0 | 30.0 | 30.0 | 30.0 | 30.0 | 34.0 | 28.5 | 35.5 | 28.0 |
| Polyisocyanate | MDI | | | | | | | | | | | | | |
| | HDI | | | | | | | | | | | | | |
| Total prepolymer | | 100 | 100 | 100 | 100 | 100 | 100 | 100 | 100 | 100 | 100 | 100 | 100 | 100 |
| Neutralizer | Triethylamine | 3.8 | 3.8 | 3.8 | 3.8 | | 3.8 | 3.8 | 3.8 | 3.8 | 3.8 | 3.8 | 6.8 | 2.8 |
| | NaOH | | | | | 1.5 | | | | | | | | |
| Chain extender | Diethylenetriamine | 0.7 | 0.7 | 0.7 | 1.0 | 0.7 | | 0.7 | 0.7 | 0.7 | 2.1 | 0.3 | 0.7 | 0.7 |
| | Isophoronediamine | | | | | | 1.7 | | | | | | | |
| Mixing ratio (A2)/(A1) | | 14 | 14 | 14 | 14 | 14 | 14 | 6 | 20 | 28 | 14 | 14 | 14 | 14 |
| NCO/OH | | 1.12 | 1.09 | 1.13 | 1.17 | 1.12 | 1.12 | 1.12 | 1.12 | 1.12 | 1.32 | 1.05 | 1.11 | 1.11 |
| Acid value of polyurethane resin [mgKOH/g] | | 21 | 21 | 21 | 21 | 21 | 21 | 21 | 21 | 21 | 21 | 21 | 38 | 15.5 |
| Evaluation | Antifouling properties | ○ | ○ | ○ | ○ | ○ | ○ | Δ | Δ | Δ | Δ | ○ | Δ | ○ |
| | Tack suppression | ○ | ○ | Δ | Δ | ○ | Δ | ○ | ○ | Δ | ○ | Δ | ○ | Δ |
| | Solvent resistance | ○ | ○ | ○ | ○ | Δ | ○ | Δ | ○ | ○ | ○ | Δ | ○ | Δ |
| | Self-healing properties | ○ | Δ | Δ | ○ | ○ | Δ | ○ | ○ | ○ | Δ | Δ | Δ | ○ |

**[Table 2]**

| | | Comparative Example | | | | | | | | | |
|---|---|---|---|---|---|---|---|---|---|---|---|
| | | 1 | 2 | 3 | 4 | 5 | 6 | 7 | 8 | 9 | 10 |
| Composition (parts by mass) | | | | | | | | | | | |
| | Polycarbonate diol 1 | | | | 57.8 | | 65.0 | 64.0 | 47.0 | 58.0 | 65.1 |
| | Polycarbonate diol 2 | | | | | | | | | | |
| | Polycarbonate diol 3 | | | | | | | | | | |
| | Polycarbonate diol C1 | 63.0 | | | | | | | | | |
| Polyol | Polycarbonate diol C2 | | 63.0 | | | | | | | | |
| | Polycarbonate diol C3 | | | 65.0 | | | | | | | |
| | Polyethylene glycol 1 | 9.0 | 9.0 | 9.3 | | | | 1.0 | 18.0 | 8.0 | 8.9 |
| | Polyethylene glycol 2 | | | | | | | | | | |
| | Polyethylene glycol C1 | | | | 8.2 | | | | | | |
| | Polyethylene glycol C2 | | | | | 7.4 | | | | | |
| | Dimethylolpropionic acid | 5.0 | 5.0 | 5.0 | 5.0 | 5.0 | 5.0 | 5.0 | 5.0 | 5.0 | 5.0 |
| | Hydrogenated MDI | 23.0 | 23.0 | 20.7 | 29.0 | 34.6 | 30.0 | 30.0 | 30.0 | | |
| Polyisocyanate | MDI | | | | | | | | 29.0 | 29.0 | |
| | HDI | | | | | | | | | | 21.0 |
| Total prepolymer | | 100 | 100 | 100 | 100 | 100 | 100 | 100 | 100 | 100 | 100 |
| Neutralizer | Triethylamine | 3.8 | 3.8 | 3.8 | 3.8 | 3.8 | 3.8 | 3.8 | 3.8 | 3.8 | 3.8 |
| | NaOH | | | | | | | | | | |
| Chain extender | Diethylenetriamine | 0.7 | 0.7 | 0.7 | 0.7 | 1.1 | 0.7 | 0.7 | 0.7 | 0.7 | 0.7 |
| | Isophoronediamine | | | | | | | | | | |
| Mixing ratio (A2)/(A1) | | 14 | 14 | 14 | 14 | 14 | 0 | 2 | 38 | 14 | 14 |
| NCO/OH | | 1.13 | 1.13 | 1.16 | 1.13 | 1.15 | 1.12 | 1.12 | 1.12 | 1.12 | 1.13 |
| Acid value of polyurethane resin [mgKOH/g] | | 21 | 21 | 21 | 21 | 21 | 21 | 21 | 21 | 21 | 21 |
| | Antifouling properties | × | × | Δ | Δ | × | × | × | Δ | × | × |
| Evaluation | Tack suppression | × | Δ | × | × | Δ | Δ | Δ | × | ○ | × |
| | Solvent resistance | × | X | × | × | Δ | × | × | × | Δ | × |
| | Self-healing properties | Δ | × | × | × | × | × | Δ | × | × | × |

The results are as shown in Tables 1 and 2. Comparative Example 1 is an example in which a polycarbonate diol including a diol component composed only of a diol having 5 carbon atoms was used. Comparative Example 2 is an example in which a polycarbonate diol including a diol component composed only of a diol having 6 carbon atoms was used. Comparative Example 3 is an example in which a polycarbonate diol including a diol component in which 5 carbon atoms and 6 carbon atoms were used in combination but having an Mn more than the specified value was used. In these Comparative Examples, at least one of antifouling properties, tack suppression, solvent resistance, and self-healing properties was poor.

Comparative Example 4 is an example in which a polyethylene glycol having an Mn larger than the specified value was used, and the coating layer was too soft, thus being poor in tack suppression and self-healing properties and insufficient in solvent resistance. Comparative Example 5 is an example in which a polyethylene glycol having an Mn smaller than the specified value was used, and the coating layer was hard, thus being poor in self-healing properties and insufficient in antifouling properties.

Comparative Examples 6 and 7 are examples in which polyethylene glycol was not used or the amount thereof was small, and were poor in antifouling properties and solvent resistance. Comparative Example 8 is an example in which the amount of polyethylene glycol was too large, and was poor in tack suppression, solvent resistance, and self-healing properties.

Comparative Example 9 is an example in which an aromatic polyisocyanate was used, and the coating layer was too hard, thus being poor in self-healing properties and also poor in antifouling properties. Comparative Example 10 is an example in which an aliphatic polyisocyanate was used, and the coating layer was too soft, thus being poor in tack suppression and also poor in antifouling properties, solvent resistance, and self-healing properties.

By contrast, Examples 1 to 13 were excellent in self-healing properties, tack suppression, and solvent resistance, and were also excellent in antifouling properties. A comparison between Example 1 and Example 6 shows that tack suppression and self-healing properties were more excellent when trifunctional diethylenetriamine was used as a chain extender than when bifunctional isophoronediamine was used.

Note that the upper and lower limits of various numerical ranges mentioned herein may be used in any combination, and it should be appreciated that all such combinations are described herein as preferred numerical ranges. A numerical range expressed as "X to Y" means X or more and Y or less.

While some embodiments of the present invention have been described above, these embodiments are given by way of example and are not intended to limit the scope of the invention. These embodiments can be practiced in various other forms, and various omissions, substitutions, and changes can be made without departing from the spirit of the invention. These embodiments and omissions, substitutions, changes, and the like made thereto come within the scope and spirit of the invention and also similarly come within the scope of the invention set forth in the claims and equivalents thereof.

## Claims

1. An aqueous dispersion of a polyurethane resin having a portion derived from an isocyanate group-containing urethane prepolymer (A) and a portion derived from a chain extender (B),
wherein the isocyanate group-containing urethane prepolymer (A) comprises, as constituent components,
(A1) a polycarbonate diol that includes a constituent component derived from a diol having 5 carbon atoms and a constituent component derived from a diol having 6 carbon atoms and that has a number-average molecular weight of 300 to 2500,
(A2) a polyethylene glycol having a number-average molecular weight of 500 to 2500,
(A3) a carboxy group-containing polyol, and
(A4) an alicyclic polyisocyanate, and
an amount of the polyethylene glycol relative to 100 parts by mass of the polycarbonate diol is 5 to 30 parts by mass.

2. The aqueous dispersion of a polyurethane resin according to claim 1, wherein the isocyanate group-containing urethane prepolymer (A) is a urethane prepolymer that is obtained by reaction at an equivalent ratio NCO/OH of isocyanate groups to hydroxy groups of 1.02 to 1.50 and that has a terminal isocyanate group.

3. The aqueous dispersion of a polyurethane resin according to claim 1, wherein an acid value is 15 to 40 mgKOH/g.

4. The aqueous dispersion of a polyurethane resin according to claim 1, wherein the chain extender (B) includes a triamine.

5. The aqueous dispersion of a polyurethane resin according to claim 1, wherein the alicyclic polyisocyanate includes hydrogenated diphenylmethane diisocyanate.

6. A coating agent comprising the aqueous dispersion of a polyurethane resin according to any one of claims 1 to 5.
